# EUROPÄISCHE PATENTSCHRIFT

(11) **EP 0 752 363 B1**
(45) Veröffentlichungstag und Bekanntmachung des Hinweises auf die Patenterteilung: **25.04.2001**
(21) Anmeldenummer: 96109858.9
(22) Anmeldetag: 19.06.1996
(51) Int. Cl.: B62D 25/08, B62D 25/10

(54) **Abdeckung für einen Wasserkasten eines Kraftfahrzeuges**
Cover for the header box of a motor vehicle heating system
Couverture pour l'auvent d'un véhicule automobile

(30) Priorität: 03.07.1995 DE 19524120
(43) Veröffentlichungstag der Anmeldung: 08.01.1997
(73) Patentinhaber: ADAM OPEL AG, 65423 Rüsselsheim (DE)
(72) Erfinder: Brandel, Klaus, 65205 Wiesbaden (DE)

(56) Entgegenhaltungen:
- EP-A- 0 584 576
- DE-A- 2 443 636
- DE-A- 4 228 549
- FR-A- 1 374 747
- US-A- 5 040 628

## Beschreibung

Die Erfindung bezieht sich auf eine Abdeckung für einen Wasserkasten eines Kraftfahrzeuges, entsprechend den Merkmalen des Oberbegriffs des Anspruchs 1.

Sogenannte Wasserkästen sind bei Kraftfahrzeugen in der verschiedensten Ausführung bekannt. Sie sind unterhalb einer Windschutzscheibe im Bereich einer Trennwand zwischen Motor- und Fahrgastraum angeordnet und erstrecken sich annähernd über die gesamte Fahrzeugbreite. Sie werden zum Teil von einer Motorhaube überdeckt.

Wie in der DE-A-30 43 476 gezeigt, sind in diesem Fahrzeugbereich auch Lufteinlässe vorgesehen. Luftdurchlässige, gitterförmige Abdeckungen dienen dazu, grobe Verunreinigungen (Laub ...) aufzufangen. Vergleichbare Abdekkungen von Wasserkästen sind auch in der gattungsgemäßen DE-A-34 02 744 oder der DE-U-91 13 392 gezeigt.

Zunehmend geht man dazu über, in die sogenannten Wasserkästen Bauelemente und Baugruppen zu integrieren, die früher im Motor- oder Fahrgastraum angeordnet waren. Nach der DE-A 36 19 183, DE-A 37 32 087 und DE-A 38 20 644 sind Elemente der elektrischen Anlage von Fahrzeugen im Wasserkasten untergebracht. Auch Pollenfilter der Fahrzeugbelüftungsanlage und andere servicerelevante Bauelemente können dort angeordnet werden.

In der DE-PS 40 35 808 ist ein sehr kleiner Wasserkasten gezeigt, der als Ganzes abnehmbar oder verschwenkbar ist. Danach kann ein Pollenfilter unterhalb des Wasserkastens gewartet werden. Wasserkästen dieser Art sind jedoch in modernen Fahrzeugen unüblich. Es bedarf einer genauen Anleitung, um den Filter wechseln zu können. Der Service wird ausschließlich in der Werkstatt stattfinden. Der Fahrzeuginhaber wird in der Regel gar nicht wissen, daß am beschriebenen Ort Wartungen durchzuführen sind.

Es ist Aufgabe der Erfindung, den Wasserkasten eines Fahrzeugs mehr als bisher zur Unterbringung auch service-relevanter Bauelemente zu nutzen, dabei aber trotzdem die einfache Durchführbarkeit von Servicearbeiten zu gewährleisten. Eine zu schaffende Abdeckung des Wasserkastens soll weiterhin sicher das Eindringen grober Verunreinigungen in den Wasserkasten verhindern, die Durchführung von Servicearbeiten gestatten und nur einen geringen Kostenaufwand verursachen.

Zur Lösung dieser Aufgabe zeichnet sich eine erfindungsgemäße.Abdeckung des Wasserkastens durch die im Patentanspruch 1 angegebenen Merkmale aus. Weitere Merkmale der Erfindung ergeben sich aus den Patentansprüchen 2 bis 8.

Sind in die Abdeckung des Wasserkastens Serviceklappen integriert und werden diese gleichzeitig mit einer Motorhaube geöffnet, können Wartungsarbeiten mit geringem Aufwand durchgeführt werden. Dem Fahrzeuginhaber wird durch die sich öffnenden Serviceklappen sofort deutlich, daß es sich um Orte handelt, denen besondere Beachtung zukommt.

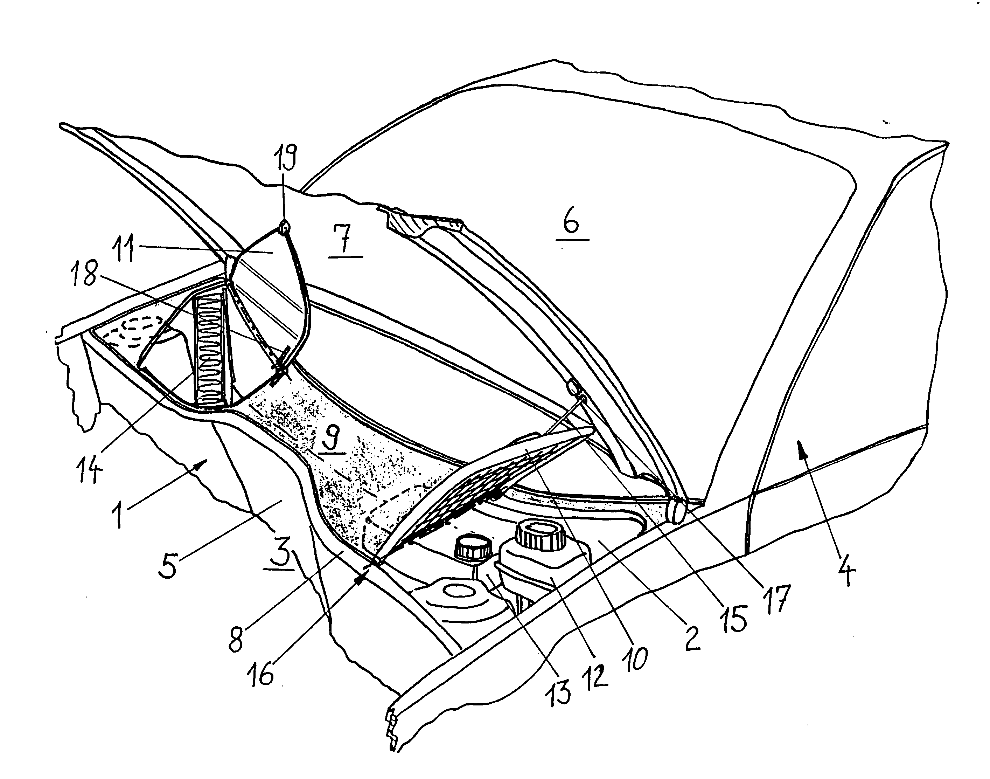

Die Erfindung wird detailliert anhand eines in einer Figur skizzierten Beispiels erläutert. Die Figur zeigt einen Wasserkasten innerhalb einer andeutungsweise gezeigten Karosserie eines Kraftfahrzeuges, wobei der Wasserkasten mit einer erfindungsgemäßen Abdeckung versehen ist.

In der Figur ist ein Wasserkasten 1 im Bereich einer Trennwand 2 zwischen Motorraum 3 und Fahrgastraum 4 angeordnet. Er verläuft annähernd über die gesamte Breite des Fahrzeugs und wird von der Trennwand 2 sowie einer Schottwand 5 und von Seitenwänden gebildet. Eine Windschutzscheibe 6 erstreckt sich schrägstehend hinter dem Wasserkasten 1, und eine Motorhaube 7 verdeckt den Wasserkasten 1 in geschlossenem Zustand teilweise. Ist die Motorhaube 7 geschlossen, liegt sie an einer Dichtung 8 der Schottwand 5 an.

Der Wasserkasten 1 wird von einer Abdeckung 9 nach oben hin verschlossen. Die Abdeckung 9 beinhaltet im Ausführungsbeispiel zwei Serviceklappen 10, 11, welche selbsttätig aufklappen, wenn die Motorhaube 7 geöffnet wird. Neben anderen Bauelementen befinden sich auch servicerelevante Bauelemente im Wasserkasten 1. Gezeigt sind ein Behälter 12 für Bremsflüssigkeit, ein Behälter 13 einer Scheibenwaschanlage und ein Pollenfilter 14. Es können weitere Bauelemente wie eine Batterie oder ein Sicherungskasten im Wasserkasten 1 plaziert sein.

Die Behälter 12, 13 befinden sich unterhalb der Klappe 10, wenn diese geschlossen ist. Bei offener Klappe 10 können Flüssigkeitsstände überprüft und gegebenenfalls Flüssigkeit nachgefüllt werden. Durch die geöffnete Klappe 10 werden die Behälter 12, 13 deutlich sichtbar. Sowohl die Klappe 10 als auch die Behälter 12, 13 sollten auffällig gestaltet werden (Farbe), so daß die Aufmerksamkeit des Fahrzeugnutzers bzw. -inhabers erregt wird.

Die Klappe 10 ist über einen Seilzug 15 mit der Motorhaube 7 und durch ein Filmscharnier 16 mit der restlichen Abdeckung 9 verbunden. Beim Öffnen der Haube 7 wird die Klappe 10 nach oben gezogen und verschwenkt um eine Achse des Filmscharniers 16. Das Schließen der Klappe 10 erfolgt selbsttätig durch ihre Gewichtskraft, wenn die Haube 7 geschlossen wird. Kurz vor Erreichen der Schließstellung der Motorhaube 7 drückt ein Gummipuffer 17 auf die Serviceklappe 10 und hält diese dann klapperfrei in der Schließstellung.

Die Serviceklappe 10 ist gitterförmig ausgebildet und dient gleichzeitig als Lufteinlaß. Laub und grobe Luftverunreinigungen werden davon abgehalten, in den Wasserkasten 1 einzudringen.

Die Serviceklappe 11 ist um eine Achse 18 verschwenkbar an der Abdeckung 9 gelagert und ist ebenfalls in ihrer Schließstellung Bestandteil der Abdeckung 9. Sie verdeckt den Pollenfilter 14 bzw. erlaubt den Zugang zu diesem. Der Filter 14 kann durch die von der Serviceklappe 11 freigegebene Öffnung der Abdeckung 9 ausgetauscht werden.

Die Klappe 11 ist ständig bestrebt, sich in eine Offenstellung zu bewegen, was eine vorgespannte Torsionsfeder 18 zwischen der Klappe 11 und der Abdeckung 9 bewirkt. Eine Gummirolle 19 der Serviceklappe 11 rollt an der Motorhaube 7 ab. Somit öffnet sich die Klappe 11 beim Öffnen der Haube 7 und schließt sich auch gemeinsam mit dieser. Dies könnte auch verhindert werden, indem ein Riegel vorgesehen wird, der die Klappe 11 an der Abdeckung 9 verriegelt (nicht gezeigt). Die Klappe 11 würde sich dann beim Lösen des Riegels selbsttätig öffnen. Auch die Klappe 11 sollte beispielsweise durch ihre farbliche Gestaltung Aufmerksamkeit erregen.

## Patentansprüche

1. Abdeckung (9) für einen Wasserkasten (1) eines Kraftfahrzeuges, der servicerelevante Bauelemente beinhaltet und im Bereich einer Trennwand (2) zwischen einem Motorraum (3) und einem Fahrgastraum (4) des Fahrzeugs zumindest bereichsweise unterhalb einer Motorhaube (7) von Wandungen begrenzt wird, dadurch gekennzeichnet, daß die Abdeckung in dem Bereich über den Bauelementen eine Serviceklappe auf weist, die mit der Motorhaube (7) derart in Wirkverbindung steht, daß die Serviceklappe (10, 11) beim Öffnen der Motorhaube (7) weg- und beim Schließen der Motorhaube (7) zurückbewegt wird.

2. Abdeckung (9) nach Anspruch 1, **dadurch gekennzeichnet**, daß sie als servicerelevante Bauelemente, insbesondere einen Behälter (12) für Bremsflüssigkeit, einen Behälter (13) einer Scheibenwaschanlage, einen Pollenfilter (14), eine Batterie und/oder einen Sicherungskasten im Wasserkasten (1) verdeckt.

3. Abdeckung (9) nach Anspruch 1 oder 2, **dadurch gekennzeichnet**, daß die Serviceklappe (10) und die Abdeckung (9) ein Teil bilden und über ein Filmscharnier (16) miteinander verbunden sind.

4. Abdeckung (9) nach zumindest einem der Ansprüche 1 bis 3, **dadurch gekennzeichnet**, daß die Serviceklappe (10) durch eine Koppelstange oder einen Seilzug (15) mit der Motorhaube (7) verbunden ist.

5. Abdeckung (9) nach zumindest einem der Ansprüche 1 bis 3, **dadurch gekennzeichnet**, daß die Serviceklappe (11) von einer Feder (18) nach oben gegen die Motorhaube (7) gedrückt wird.

6. Abdeckung (9) nach zumindest einem der Ansprüche 1 bis 5, **dadurch gekennzeichnet**, daß die Serviceklappe (10, 11), insbesondere bei geschlossener Motorhaube (7), mittels eines federnden Elementes (17, 19) von der Motorhaube (7) niedergehalten wird.

7. Abdeckung (9) nach zumindest einem der Ansprüche 1 bis 6, **dadurch gekennzeichnet**, daß die Serviceklappe (10) als Frischlufteinlaß dient und dazu mit Öffnungen versehen bzw. gitterförmig ausgebildet ist.

8. Abdeckung (9) nach zumindest einem der Ansprüche 1 bis 7, **dadurch gekennzeichnet,** daß sowohl die Serviceklappe (10, 11) als auch die servicerelevanten Bauelemente eine die besondere Aufmerksamkeit erregende Gestaltung aufweisen.

## Claims

1. Cover (9) for a radiator tank (1) of a motor vehicle which contains components relevant to service and is bounded by walls in the region of a partition (2) between an engine compartment (3) and a passenger compartment (4) of the vehicle at least in some regions below a bonnet (7), characterised in that the cover in the region over the components comprises a service flap which is operatively connected to the bonnet (7) in such a way that the service flap (10, 11) is moved away on opening of the bonnet (7) and back on closure of the bonnet (7).

2. Cover (9) according to claim 1, characterised in that it conceals, as components relevant to service, in particular a receptacle (12) for brake fluid, a receptacle (13) of a windscreen washer system, a pollen filter (14), a battery and/or a fuse box in the radiator tank (1).

3. Cover (9) according to claim 1 or 2, characterised in that the service flap (10) and the cover (9) form one part and are joined together by a film hinge (16).

4. Cover (9) according to one or more of claims 1 to 3, characterised in that the service flap (10) is joined to the bonnet (7) by a coupling rod or a control cable (15).

5. Cover (9) according to one or more of claims 1 to 3, characterised in that the service flap (11) is pushed up towards the bonnet (7) by a spring (18).

6. Cover (9) according to one or more of claims 1 to 5, characterised in that the service flap (10, 11), particularly when the bonnet (7) is closed, is held down by the bonnet (7) by means of a spring element (17, 19).

7. Cover (9) according to one or more of claims 1 to 6, characterised in that the service flap (10) serves as a fresh air inlet and for this purpose is provided with openings or constructed like a grille.

8. Cover (9) according to one or more of claims 1 to 7, characterised in that both the service flap (10, 11) and the components relevant to service have a design which attracts particular attention.

## Revendications

1. Couverture (9) pour un compartiment à eau (1) d'un véhicule automobile, qui abrite des composants importants sur le plan de l'entretien et qui, dans la région d'une paroi de séparation (2) entre un compartiment moteur (3) et un habitacle (4) du véhicule, est limité au moins par endroits par des cloisons, caractérisée en ce que la couverture, dans la zone au-dessus des composants, comporte une trappe d'accès qui est liée au capot moteur (7) de manière telle que ladite trappe d'accès (10, 11) s'ouvre lors de l'ouverture du capot moteur (7) et se referme lors de la fermeture du capot moteur (7).

2. Couverture (9) selon la revendication 1, caractérisée en ce qu'elle couvre en particulier un réservoir (12) pour du liquide de frein, un réservoir (13) pour une installation de lave-glace, un filtre à pollen (14) une batterie et/ou une boîte à fusibles.

3. Couverture (9) selon la revendication 1 ou 2, caractérisée en ce que la trappe d'accès (10) et la couverture (9) ne font qu'un et sont liées l'une à l'autre par une charnière-film (16).

4. Couverture (9) selon au moins une des revendications 1 à 3, caractérisée en ce que la trappe d'accès (10) et la couverture (9) sont reliées au capot moteur (7) par une tige de liaison ou par un câble (15).

5. Couverture (9) selon au moins une des revendications 1 à 3, caractérisée en ce que la trappe d'accès (10) est repoussée vers le haut, contre le capot de moteur (7) par un ressort (18).

6. Couverture (9) selon au moins une des revendications 1 à 5, caractérisée en ce que la trappe d'accès (10, 11), notamment lorsque le capot moteur (7) est fermé, est tenue par le capot moteur (7) par l'intermédiaire d'un élément (17, 19) élastique.

7. Couverture (9) selon au moins une des revendications 1 à 6, caractérisée en ce que la trappe d'accès (10) sert d'entrée d'air frais et, à cet effet, est pourvue d'ouvertures ou est conformée en grille.

8. Couverture (9) selon au moins une des revendications 1 à 7, caractérisée en ce que la trappe d'accès (10, 11) et les composants importants sur le plan de l'entretien présentent une conformation attirant plus particulièrement l'attention.
